# EUROPEAN PATENT APPLICATION

(11) **EP 4 836 264 A1**
(43) Date of publication of application: **04.11.2026**
(21) Application number: 26175689.4
(22) Date of filing: 30.04.2026
(51) Int. Cl.: H02M 1/12, H02M 7/5387, H02M 1/44, H02M 1/36

(54) **POWER CONVERSION APPARATUS AND CONTROL METHOD THEREFOR**

(30) Priority: 30.04.2025 CN 202510575709
(71) Applicant: HUAWEI TECHNOLOGIES CO., LTD., Shenzhen 518129 (CN)
(72) Inventor: Chen, Yue, Shenzhen, 518129 (CN); Liu, Qiang, Shenzhen, 518129 (CN); Zhang, Jiangteng, Shenzhen, 518129 (CN)
(74) Representative: Gill Jennings & Every LLP

(57) **Abstract**

Embodiments of this application disclose a power conversion apparatus and a control method therefor, and relate to the field of power electronics technologies, to resolve a problem of how to suppress a high-frequency common-mode leakage current of a Heric inverter circuit. The power conversion apparatus includes a first inductor, a second inductor, a bus capacitor connected between a positive direct current bus and a negative direct current bus, a first bridge arm, a second bridge arm, a capacitor branch, and a third bridge arm connected between a midpoint of the first bridge arm and a midpoint of the second bridge arm.

## Description

### TECHNICAL FIELD

This application relates to the field of power electronics, and in particular, to a power conversion apparatus and a control method therefor.

### BACKGROUND

Compared with an isolated inverter circuit with a power frequency transformer, a non-isolated inverter circuit has higher conversion efficiency and lower costs. Therefore, a conventional household small-power single-phase inverter in a photovoltaic power generation system usually uses the non-isolated inverter circuit. In the non-isolated inverter circuit, a highly efficient and reliable inverter concept (highly efficient and reliable inverter concept, Heric) inverter circuit has low component costs, high conversion efficiency, and excellent performance on a system leakage current. Therefore, the conventional household small-power single-phase inverter usually uses the Heric inverter circuit.

However, in a free-wheeling stage of the Heric inverter circuit, an LC common-mode resonant loop is formed, and a high-frequency common-mode leakage current is generated. The high-frequency common-mode leakage current causes an increase in total harmonic current distortion (total harmonic current distortion, THDi) of a power grid, and causes an increase in electromagnetic interference (electromagnetic interference, EMI), thereby increasing a loss of the conventional household small-power single-phase inverter and reducing reliability of the inverter. Therefore, how to suppress the high-frequency common-mode leakage current of the Heric inverter circuit becomes an urgent problem to be resolved.

### SUMMARY

Embodiments of this application provide a power conversion apparatus and a control method therefor, to resolve a problem of how to suppress a high-frequency common-mode leakage current of a Heric inverter circuit.

To achieve the foregoing objectives, the following technical solutions are used in embodiments of this application.

According to a first aspect of embodiments of this application, a power conversion apparatus is provided. The power conversion apparatus is configured to convert a direct current output by a photovoltaic array or an energy storage battery into an alternating current, and the power conversion apparatus includes a first inductor, a second inductor, a positive direct current bus, a negative direct current bus, a bus capacitor connected between the positive direct current bus and the negative direct current bus, a first bridge arm, a second bridge arm, a capacitor branch, and a third bridge arm connected between a midpoint of the first bridge arm and a midpoint of the second bridge arm. The first bridge arm includes a first switching transistor and a second switching transistor that are connected in series, the second bridge arm includes a third switching transistor and a fourth switching transistor that are connected in series, the third bridge arm includes a fifth switching transistor and a sixth switching transistor, and a drain or a collector of the fifth switching transistor is connected to a drain or a collector of the sixth switching transistor, or a source or an emitter of the fifth switching transistor is connected to a source or an emitter of the sixth switching transistor. The capacitor branch includes a first capacitor, the second capacitor, and a third capacitor that are connected in series, the first inductor is connected between a first end of the third bridge arm and a first end of the second capacitor, the second inductor is connected between a second end of the third bridge arm and a second end of the second capacitor, the first capacitor is connected between the positive direct current bus and the first end of the second capacitor, the third capacitor is connected between the second end of the second capacitor and the negative direct current bus, and the two ends of the second capacitor are configured to connect to a power grid or a load.

According to this solution, a resonance frequency of an LC common-mode resonant loop formed in a free-wheeling stage is related to a sum of equivalent capacitance values of the first switching transistor to the fourth switching transistor, and is related to a sum of equivalent capacitance values of the first capacitor and the third capacitor. Selecting the first capacitor or the third capacitor with a different capacitance value can increase the sum of the equivalent capacitance values of the first capacitor and the third capacitor, decrease the resonance frequency of the LC common-mode resonant loop, and increase an impedance of the LC common-mode resonant loop, thereby decreasing a high-frequency common-mode leakage current generated by the LC common-mode resonant loop, decreasing THDi, EMI, and a loss of the power conversion apparatus, and improving reliability of the power conversion apparatus.

With reference to the first aspect, in an implementation, the power conversion apparatus further includes a first resistor and a second resistor, one end of the first resistor is connected to a first end of the second capacitor, one end of the second resistor is connected to a second end of the second capacitor, and the other end of the first resistor and the other end of the second resistor are both configured to connect to the negative direct current bus and a reference ground.

According to this solution, the first resistor and the second resistor are disposed, so that the reference ground and the negative direct current bus can be equipotential, thereby simplifying hardware design of the power conversion apparatus and reducing costs.

With reference to the first aspect, in an implementation, the power conversion apparatus further includes a controller. The controller is configured to: control synchronously turned-on switching transistors and a third bridge arm to be alternately turned on, and after the synchronously turned-on switching transistors and the third bridge arm are alternately turned on, when voltages at two ends of a second capacitor are equal, control the power conversion apparatus to start to operate normally. Turned-on time of the synchronously turned-on switching transistors is less than or equal to a preset time threshold, and a first switching transistor and a fourth switching transistor are the synchronously turned-on switching transistors, or a second switching transistor and a third switching transistor are the synchronously turned-on switching transistors.

According to this solution, at the moment at which the power conversion apparatus starts to operate, the voltage at the midpoint of the first bridge arm and the voltage at the midpoint of the second bridge arm may differ greatly, and the stress of the switching transistor may be uneven. In this case, the controller first controls the synchronously turned-on switching transistors and the third bridge arm to be alternately turned on, and the turned-on time of the synchronously turned-on switching transistors is less than or equal to the preset time threshold, so that damage to the switching transistor due to large stress can be avoided. In addition, when the voltages at the two ends of the second capacitor are equal, the controller controls the power conversion apparatus to start to operate normally. The stress and the loss of the switching transistor are even when the power conversion apparatus starts to operate, so that reliability and efficiency of the power conversion apparatus can be improved.

With reference to the first aspect, in an implementation, a first capacitance value sum is greater than or equal to N times a second capacitance value sum. The first capacitance value sum is a sum of equivalent capacitance values of the first capacitor and the third capacitor, the second capacitance value sum is a sum of equivalent capacitance values of the first switching transistor, the second switching transistor, the third switching transistor, and the fourth switching transistor, and N is greater than 1.

According to this solution, larger first capacitance value sum indicates a lower resonance frequency of the LC common-mode resonant loop, a larger impedance of the LC common-mode resonant loop, and a smaller high-frequency common-mode leakage current generated by the LC common-mode resonant loop, thereby decreasing the THDi, the EMI, and the loss of the power conversion apparatus, and improving the reliability of the power conversion apparatus.

With reference to the first aspect, in an implementation, N is equal to 10 or 20.

According to this solution, when the first capacitance value sum is far greater than the second capacitance value sum, the resonance frequency of the LC common-mode resonant loop is lower, the impedance of the LC common-mode resonant loop is higher, and the high-frequency common-mode leakage current generated by the LC common-mode resonant loop is lower, thereby greatly decreasing the THDi, the EMI, and the loss of the power conversion apparatus, and improving the reliability of the power conversion apparatus.

With reference to the first aspect, in an implementation, the power conversion apparatus further includes a magnetic ring. A cable between the first inductor and the first end of the second capacitor passes through the magnetic ring, and a cable between the second inductor and the second end of the second capacitor also passes through the magnetic ring.

In an implementation, the cable between the first inductor and the first end of the second capacitor may be wound around the magnetic ring, or the cable between the second inductor and the second end of the second capacitor may be wound around the magnetic ring. A specific quantity of turns of the cable wound around the magnetic ring is not limited in embodiments of this application.

According to this solution, disposing the magnetic ring can further decrease an oscillation amplitude of the voltage at the midpoint of the first bridge arm and an oscillation amplitude of the voltage at the midpoint of the second bridge arm, and can further decrease the high-frequency common-mode leakage current generated by the LC common-mode resonant loop, so as to decrease the THDi, the EMI, and the loss of the power conversion apparatus, and improve the reliability of the power conversion apparatus.

With reference to the first aspect, in an implementation, the magnetic ring is a magnetic ring made of an amorphous alloy material.

According to this solution, because the amorphous alloy material has advantages of a high resistivity, a low hysteresis loss, and a good high-frequency characteristic, the high-frequency common-mode leakage current generated by the LC common-mode resonant loop can be further decreased, the THDi, the EMI, and the loss of the power conversion apparatus can be further decreased, and the reliability of the power conversion apparatus can be improved.

According to a second aspect of embodiments of this application, a control method for a power conversion apparatus is provided, and is applied to the power conversion apparatus. The method includes: controlling synchronously turned-on switching transistors and a third bridge arm to be alternately turned on, and after the synchronously turned-on switching transistors and the third bridge arm are alternately turned on, when voltages at two ends of a second capacitor are equal, controlling the power conversion apparatus to start to operate normally. Turned-on time of the synchronously turned-on switching transistors is less than or equal to a preset time threshold, and a first switching transistor and a fourth switching transistor are the synchronously turned-on switching transistors, or a second switching transistor and a third switching transistor are the synchronously turned-on switching transistors. The power conversion apparatus is configured to convert a direct current output by a photovoltaic array or an energy storage battery into an alternating current, and the power conversion apparatus includes a first inductor, a second inductor, a positive direct current bus, a negative direct current bus, a bus capacitor connected between the positive direct current bus and the negative direct current bus, a first bridge arm, a second bridge arm, a capacitor branch, and a third bridge arm connected between a midpoint of the first bridge arm and a midpoint of the second bridge arm. The first bridge arm includes a first switching transistor and a second switching transistor that are connected in series, the second bridge arm includes a third switching transistor and a fourth switching transistor that are connected in series, the third bridge arm includes a fifth switching transistor and a sixth switching transistor, and a drain or a collector of the fifth switching transistor is connected to a drain or a collector of the sixth switching transistor, or a source or an emitter of the fifth switching transistor is connected to a source or an emitter of the sixth switching transistor. The capacitor branch includes a first capacitor, the second capacitor, and a third capacitor that are connected in series, the first inductor is connected between a first end of the third bridge arm and a first end of the second capacitor, the second inductor is connected between a second end of the third bridge arm and a second end of the second capacitor, the first capacitor is connected between the positive direct current bus and the first end of the second capacitor, the third capacitor is connected between the second end of the second capacitor and the negative direct current bus, and the two ends of the second capacitor are configured to connect to a power grid or a load.

With reference to the second aspect, in an implementation, the power conversion apparatus further includes a first resistor and a second resistor, one end of the first resistor is connected to a first end of the second capacitor, one end of the second resistor is connected to a second end of the second capacitor, and the other end of the first resistor and the other end of the second resistor are both configured to connect to the negative direct current bus and a reference ground.

With reference to the second aspect, in an implementation, a first capacitance value sum is greater than or equal to N times a second capacitance value sum. The first capacitance value sum is a sum of equivalent capacitance values of the first capacitor and the third capacitor, the second capacitance value sum is a sum of equivalent capacitance values of the first switching transistor, the second switching transistor, the third switching transistor, and the fourth switching transistor, and N is greater than 1.

With reference to the second aspect, in an implementation, N is equal to 10 or 20.

According to a third aspect of embodiments of this application, a photovoltaic energy storage system is provided. The photovoltaic energy storage system includes a power conversion apparatus and an energy storage battery. A positive electrode of the energy storage battery is connected to a positive direct current bus, and a negative electrode of the energy storage battery is connected to a negative direct current bus. The power conversion apparatus is configured to convert a direct current output by a photovoltaic array or an energy storage battery into an alternating current, and the power conversion apparatus includes a first inductor, a second inductor, the positive direct current bus, the negative direct current bus, a bus capacitor connected between the positive direct current bus and the negative direct current bus, a first bridge arm, a second bridge arm, a capacitor branch, and a third bridge arm connected between a midpoint of the first bridge arm and a midpoint of the second bridge arm. The first bridge arm includes a first switching transistor and a second switching transistor that are connected in series, the second bridge arm includes a third switching transistor and a fourth switching transistor that are connected in series, the third bridge arm includes a fifth switching transistor and a sixth switching transistor, and a drain or a collector of the fifth switching transistor is connected to a drain or a collector of the sixth switching transistor, or a source or an emitter of the fifth switching transistor is connected to a source or an emitter of the sixth switching transistor. The capacitor branch includes a first capacitor, the second capacitor, and a third capacitor that are connected in series, the first inductor is connected between a first end of the third bridge arm and a first end of the second capacitor, the second inductor is connected between a second end of the third bridge arm and a second end of the second capacitor, the first capacitor is connected between the positive direct current bus and the first end of the second capacitor, the third capacitor is connected between the second end of the second capacitor and the negative direct current bus, and the two ends of the second capacitor are configured to connect to a power grid or a load.

With reference to the third aspect, in an implementation, the power conversion apparatus further includes a first resistor and a second resistor, one end of the first resistor is connected to a first end of the second capacitor, one end of the second resistor is connected to a second end of the second capacitor, and the other end of the first resistor and the other end of the second resistor are both configured to connect to the negative direct current bus and a reference ground.

With reference to the third aspect, in an implementation, the power conversion apparatus further includes a controller. The controller is configured to: control synchronously turned-on switching transistors and the third bridge arm to be alternately turned on, and after the synchronously turned-on switching transistors and the third bridge arm are alternately turned on, when voltages at the two ends of the second capacitor are equal, control the power conversion apparatus to start to operate normally. Turned-on time of the synchronously turned-on switching transistors is less than or equal to a preset time threshold, and the first switching transistor and the fourth switching transistor are the synchronously turned-on switching transistors, or the second switching transistor and the third switching transistor are the synchronously turned-on switching transistors.

With reference to the third aspect, in an implementation, a first capacitance value sum is greater than or equal to N times a second capacitance value sum. The first capacitance value sum is a sum of equivalent capacitance values of the first capacitor and the third capacitor, the second capacitance value sum is a sum of equivalent capacitance values of the first switching transistor, the second switching transistor, the third switching transistor, and the fourth switching transistor, and N is greater than 1.

With reference to the third aspect, in an implementation, N is equal to 10 or 20.

For descriptions of the second aspect and the third aspect in this application, refer to the detailed descriptions of the first aspect. In addition, for beneficial effects of the second aspect and the third aspect, refer to beneficial effect analyses of the first aspect. Details are not described herein again.

### BRIEF DESCRIPTION OF DRAWINGS

FIG. 1 is a schematic of a circuit topology of a photovoltaic energy storage system according to an embodiment of this application;
FIG. 2 is a schematic of a circuit topology of a power conversion apparatus;
FIG. 3 is a diagram of a waveform of a voltage;
FIG. 4A and FIG. 4B are schematics of circuit topologies of an LC common-mode resonant loop;
FIG. 5 is a schematic of a circuit topology of a power conversion apparatus according to an embodiment of this application;
FIG. 6 is a schematic of a circuit topology of an LC common-mode resonant loop according to an embodiment of this application;
FIG. 7 is a diagram of a waveform of a voltage according to an embodiment of this application;
FIG. 8A and FIG. 8B are schematics of a circuit topology of another power conversion apparatus according to an embodiment of this application;
FIG. 9 is a diagram of a waveform of another voltage according to an embodiment of this application;
FIG. 10 is a schematic of a circuit topology of another power conversion apparatus according to an embodiment of this application; and
FIG. 11 is a schematic flowchart of a control method for a power conversion apparatus according to an embodiment of this application.

### DESCRIPTION OF EMBODIMENTS

The making and use of embodiments are discussed in detail below. It should be appreciated, however, that many applicable inventive concepts provided in this application may be implemented in a plurality of specific environments. Specific embodiments discussed are merely used to describe specific manners to implement and use this specification and this technology, and do not limit the scope of this application.

Unless otherwise defined, all technical terms used herein have the same meaning as those commonly known to a person of ordinary skill in the art.

The circuits or other components may be described as or referred to as "configured to" perform one or more tasks. In this case, the term "configured to" is used for implying a structure by indicating that a circuit/component includes a structure (for example, a circuit system) that performs one or more tasks during operation. Therefore, even when a specified circuit/component is currently not operable (for example, not opened), the circuit/component may also be referred to as being configured to perform the task. Circuits/components used in conjunction with the "configured to" phrase include hardware, for example, a circuit for performing an operation.

The following describes the technical solutions in embodiments of this application with reference to the accompanying drawings in embodiments of this application. In this application, in embodiments of this application, the words such as "first" and "second" do not limit a quantity and a sequence.

In this application, the term "example" or "for example" is used to represent giving an example, an illustration, or a description. Any embodiment or design scheme described as an "example" or "for example" in this application should not be explained as being more preferred or having more advantages than another embodiment or design scheme. Exactly, use of the word like "example" or "for example" is intended to present a related concept in a specific manner.

Before embodiments of this application are described, the background of this application is first described.

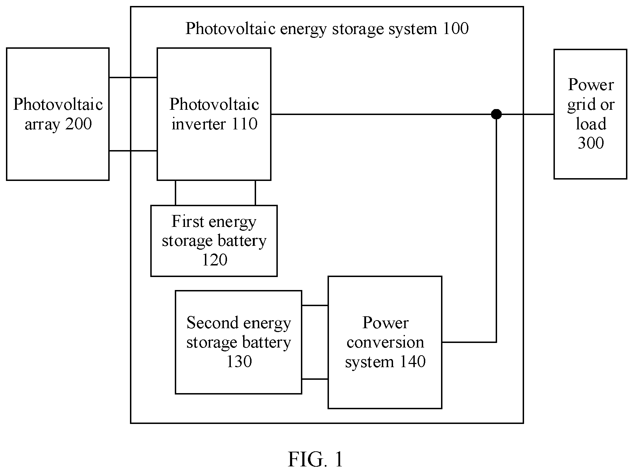

FIG. 1 is a schematic of a circuit topology of a photovoltaic energy storage system 100 according to an embodiment of this application. The photovoltaic energy storage system 100 includes a photovoltaic inverter 110 and a first energy storage battery 120. A first direct current port of the photovoltaic inverter 110 is configured to connect to a photovoltaic array 200. A second direct current port of the photovoltaic inverter 110 is connected to an electrode of the first energy storage battery 120. An alternating current port of the photovoltaic inverter 110 is configured to connect to a power grid or a load 300. The photovoltaic array 200 is configured to convert solar energy into a direct current, and the photovoltaic inverter 110 is configured to: convert the direct current into an alternating current and transmit the alternating current to the power grid or the load 300, or the photovoltaic inverter 110 is configured to: convert a direct current output by the first energy storage battery 120 into an alternating current and transmit the alternating current to the power grid or the load 300. The photovoltaic energy storage system 100 may also be referred to as a photovoltaic power generation system, and the photovoltaic inverter 110 may also be referred to as a photovoltaic energy storage inverter.

In an implementation, as shown in FIG. 1, the photovoltaic energy storage system 100 may further include a second energy storage battery 130 and a power conversion system (power conversion system, PCS) 140. An electrode of the second energy storage battery 130 is connected to a direct current port of the power conversion system 140, and an alternating current port of the power conversion system 140 is connected to the alternating current port of the photovoltaic inverter 110. The power conversion system 140 is configured to convert the alternating current output by the photovoltaic inverter 110 into a direct current, or convert an alternating current provided by the power grid or the load 300 into a direct current, to charge the second energy storage battery 130. The power conversion system 140 is further configured to convert a direct current output by the second energy storage battery 130 into an alternating current, to supply power to the power grid or the load 300.

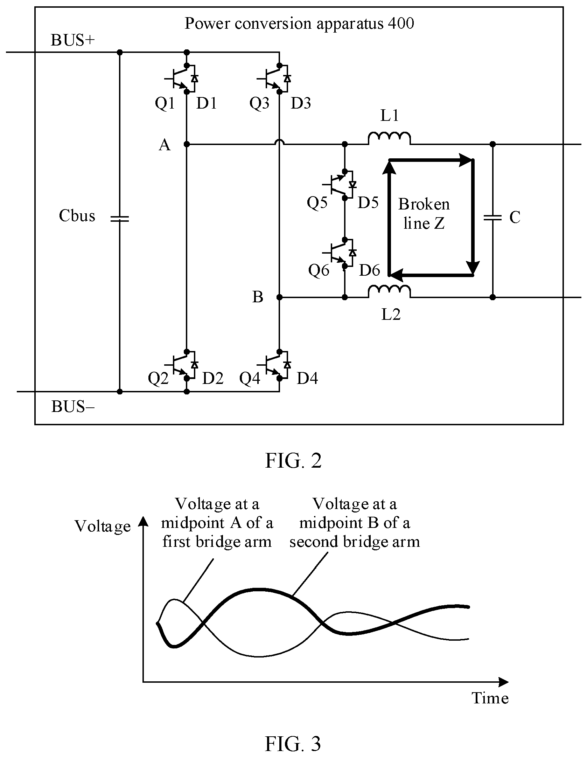

Each of the photovoltaic inverter 110 and the power conversion system 140 may be referred to as a power conversion apparatus. Because a Heric inverter circuit has advantages of low component costs and high conversion efficiency, and has excellent performance in a system leakage current, the power conversion apparatus may include the Heric inverter circuit, so that the power conversion apparatus may have the advantages of the Heric inverter circuit. FIG. 2 is a schematic of a circuit topology of a power conversion apparatus 400. The power conversion apparatus 400 includes a first inductor L1, a second inductor L2, a capacitor C, a positive direct current bus BUS+, a negative direct current bus BUS-, a bus capacitor Cbus connected between the positive direct current bus BUS+ and the negative direct current bus BUS-, a first bridge arm, a second bridge arm, and a third bridge arm connected between a midpoint A of the first bridge arm and a midpoint B of the second bridge arm. The first bridge arm includes a first switching transistor Q1 and a second switching transistor Q2 that are connected in series, the second bridge arm includes a third switching transistor Q3 and a fourth switching transistor Q4 that are connected in series, the third bridge arm includes a fifth switching transistor Q5 and a sixth switching transistor Q6, and a drain or a collector of the fifth switching transistor Q5 is connected to a drain or a collector of the sixth switching transistor Q6, or a source or an emitter of the fifth switching transistor Q5 is connected to a source or an emitter of the sixth switching transistor Q6. The first inductor L1 is connected between a first end of the third bridge arm and a first end of the capacitor C, the second inductor L2 is connected between a second end of the third bridge arm and a second end of the capacitor C, and two ends of the capacitor C are configured to connect to the power grid or the load 300.

The switching transistor in embodiments of this application may be a metal-oxide-semiconductor field-effect transistor (metal-oxide-semiconductor field-effect transistor, MOSFET). The metal-oxide-semiconductor field-effect transistor may also be referred to as a MOS transistor for short. Each MOS transistor includes a reverse-biased body diode. Alternatively, the switching transistor in embodiments of this application may be an insulated-gate bipolar transistor (insulated-gate bipolar transistor, IGBT). For example, as shown in FIG. 2, the first switching transistor Q1 to the sixth switching transistor Q6 are IGBTs, and the power conversion apparatus 400 further includes a diode D1 to a diode D6 that are respectively connected in reverse parallel to the first switching transistor Q1 to the sixth switching transistor Q6.

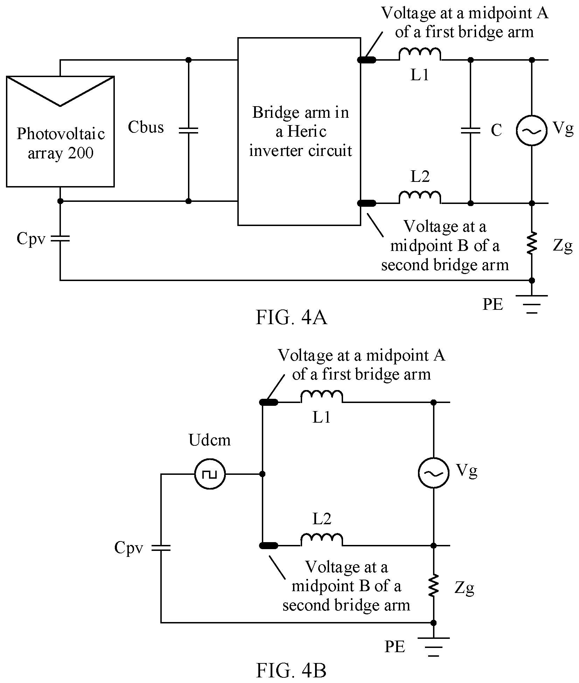

However, because of a parasitic capacitance Cpv between the photovoltaic array 200 and the ground (which may also be referred to as protective earthing (protective earthing, PE)) and a parasitic parameter of the Heric inverter circuit, when the Heric inverter circuit operates in a free-wheeling stage and a free-wheeling loop in the Heric inverter circuit is shown by a broken line Z in FIG. 2, FIG. 3 is a diagram of waveforms of a voltage at the midpoint A of the first bridge arm and a voltage at the midpoint B of the second bridge arm. The voltage at the midpoint A of the first bridge arm and the voltage at the midpoint B of the second bridge arm have no fixed voltage clamping. Consequently, a large oscillation occurs, and a large high-frequency common-mode leakage current is generated. Specifically, FIG. 4A is a schematic of a circuit topology of an LC common-mode resonant loop formed by the parasitic parameter of the photovoltaic energy storage system 100, a bridge arm in the Heric inverter circuit, the first inductor L1, the second inductor L2, the capacitor C, and a power grid impedance Zg. Cpv is a parasitic capacitance between the photovoltaic array 200 and the ground, and Vg is an equivalent alternating current source of the power grid or the load 300. FIG. 4B is a schematic of an equivalent circuit topology of the LC common-mode resonant loop, where Udem is a direct current bus common-mode voltage, and the direct current bus common-mode voltage Udem is an average value of a voltage of the positive direct current bus BUS+ and a voltage of the negative direct current bus BUS-. Refer to FIG. 2 to FIG. 4B. When the Heric inverter circuit operates in the free-wheeling stage, because the voltage at the midpoint A of the first bridge arm and the voltage at the midpoint B of the second bridge arm oscillate greatly, the LC common-mode resonant loop generates a large high-frequency common-mode leakage current. The high-frequency common-mode leakage current causes larger THDi, larger EMI, an increase in a loss of the power conversion apparatus 400 (which may also be referred to as a single-phase inverter), and a decrease in reliability of the power conversion apparatus 400.

In view of this, an embodiment of this application provides a power conversion apparatus. The power conversion apparatus changes an equivalent circuit topology of an LC common-mode resonant loop in a free-wheeling stage of a Heric inverter circuit by adding a capacitor, to decrease a resonance frequency of the LC common-mode resonant loop after change, and decrease a high-frequency common-mode leakage current.

The power conversion apparatus provided in embodiments of this application may be a photovoltaic inverter, and the power conversion apparatus may be used in the photovoltaic energy storage system 100 in place of the photovoltaic inverter 110. The power conversion apparatus provided in embodiments of this application may alternatively be a power conversion system, and the power conversion apparatus may be used in the photovoltaic energy storage system 100 in place of the power conversion system 140. The foregoing detailed descriptions of the photovoltaic inverter 110 and the power conversion system 140 may be correspondingly introduced to the power conversion apparatus, and details are not described herein again in this embodiment of this application.

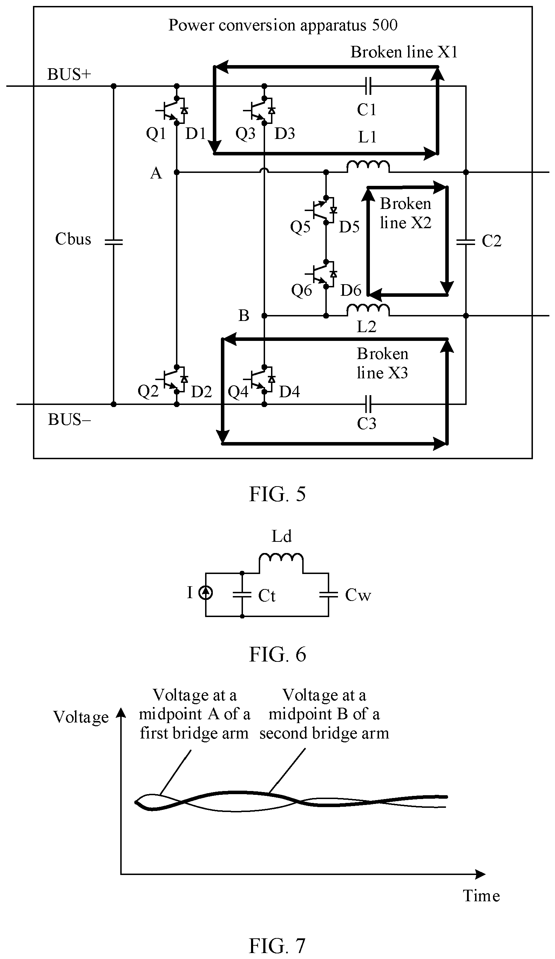

In an implementation, FIG. 5 is a schematic of a circuit topology of a power conversion apparatus 500 according to an embodiment of this application. A difference from the power conversion apparatus 400 shown in FIG. 2 lies in that the power conversion apparatus 500 does not include a capacitor C, and the power conversion apparatus 500 further includes a capacitor branch connected between a positive direct current bus BUS+ and a negative direct current bus BUS-. The capacitor branch includes a first capacitor C1, a second capacitor C2, and a third capacitor C3 that are connected in series. A first inductor L1 is connected between a first end of a third bridge arm and a first end of the second capacitor C2. A second inductor L2 is connected between a second end of the third bridge arm and a second end of the second capacitor C2. The first capacitor C1 is connected between the positive direct current bus BUS+ and the first end of the second capacitor C2. The third capacitor C3 is connected between the second end of the second capacitor C2 and the negative direct current bus BUS-. The two ends of the second capacitor C2 are configured to connect to a power grid or a load 300.

Because of a parasitic capacitance Cpv between a photovoltaic array 200 and the ground, and a parasitic parameter of the power conversion apparatus 500, when the power conversion apparatus 500 operates in the free-wheeling stage, free-wheeling loops in the power conversion apparatus 500 are shown by a broken line X1, a broken line X2, and a broken line X3 in FIG. 5. The free-wheeling loops shown by the broken line X1 and the broken line X3 are used for free-wheeling through a parasitic capacitor of a switching transistor. FIG. 6 is a schematic of an equivalent circuit topology of an LC common-mode resonant loop formed by a parasitic parameter of a photovoltaic energy storage system 100 in this case, the first inductor L1, the second inductor L2, the first capacitor C1, the second capacitor C2, the third capacitor C3, and a power grid impedance Zg. I is an equivalent current source of the photovoltaic array 200, a capacitor Ct is an equivalent capacitor of the first switching transistor Q1 to the fourth switching transistor Q4 in the power conversion apparatus 500, a capacitor Cw is an equivalent capacitor of the first capacitor C1 and the third capacitor C3, and an inductor Ld is an equivalent inductor of the first inductor L1 and the second inductor L2.

Refer to FIG. 6. In this case, a resonance frequency of the LC common-mode resonant loop satisfies the following formula: $f = \frac{1}{2 π} \sqrt{\frac{Ct + Cw}{LdCtCw}}$

Herein, f is the resonance frequency of the LC common-mode resonant loop in this case, π is a circle circumference, Ld is a sum of equivalent inductance values of the first inductor L1 and the second inductor L2, Ct is a sum of equivalent capacitance values of the first switching transistor Q1 to the fourth switching transistor Q4, and Cw is a sum of equivalent capacitance values of the first capacitor C1 and the third capacitor C3. The Cw may be referred to as a first capacitance value sum, and the Ct may be referred to as a second capacitance value sum. It may be understood that, in this case, the resonance frequency f of the LC common-mode resonant loop is related to the sum Ct of the equivalent capacitance values of the first switching transistor Q1 to the fourth switching transistor Q4, and is related to the sum Cw of the equivalent capacitance values of the first capacitor C1 and the third capacitor C3. Selecting the first capacitor C1 or the third capacitor C3 with a different capacitance value can increase the sum Cw of the equivalent capacitance values of the first capacitor C1 and the third capacitor C3, to decrease the resonance frequency of the LC common-mode resonant loop. In addition, a reactance of a capacitor (Ct or Cw) and a reactance of an inductor (Ld) are related to the resonance frequency. A smaller resonance frequency indicates a larger capacitive reactance of the capacitor and a smaller inductive reactance of the inductor. When the resonance frequency of the LC common-mode resonant loop is decreased, capacitive reactances of the equivalent capacitors Ct and Cw are increased, the inductive reactance of the equivalent inductor Ld is decreased, and an impedance of the LC common-mode resonant loop is increased, thereby decreasing the high-frequency common-mode leakage current generated by the LC common-mode resonant loop. FIG. 7 is a diagram of waveforms of a voltage at a midpoint A of the first bridge arm and a voltage at a midpoint B of the second bridge arm when the power conversion apparatus 500 operates in the free-wheeling stage. Compared with that in FIG. 3, an oscillation amplitude of the voltage at the midpoint A of the first bridge arm and an oscillation amplitude of the voltage at the midpoint B of the second bridge arm are significantly decreased, and a small high-frequency common-mode leakage current is generated.

In an implementation, the first capacitance value sum (Cw) is greater than or equal to N times the sum of the second capacitance values (Ct), where N is greater than 1. A specific value of N is not limited in embodiments of this application. It can be learned from the foregoing formula that a larger first capacitance value sum (Cw) indicates a lower resonance frequency of the LC common-mode resonant loop, a larger impedance of the LC common-mode resonant loop, and a smaller high-frequency common-mode leakage current generated by the LC common-mode resonant loop, thereby decreasing THDi, EMI, and a loss of the power conversion apparatus 500, and improving reliability of the power conversion apparatus 500.

In an implementation, N is equal to 10 or 20. In this case, the resonance frequency of the LC common-mode resonant loop satisfies the following formula: $f = \frac{1}{2 π} \sqrt{\frac{Ct + Cw}{LdCtCw}} \approx \frac{1}{2 π} \sqrt{\frac{1}{LdCt}}$

It may be understood that, when the first capacitance value sum (Cw) is far greater than the second capacitance value sum (Ct), the resonance frequency of the LC common-mode resonant loop is lower, the impedance of the LC common-mode resonant loop is higher, and the high-frequency common-mode leakage current generated by the LC common-mode resonant loop is lower, thereby greatly decreasing the THDi, the EMI, and the loss of the power conversion apparatus 500, and improving the reliability of the power conversion apparatus 500.

According to the power conversion apparatus 500 provided in this embodiment of this application, the resonance frequency of the LC common-mode resonant loop formed in the free-wheeling stage is related to the sum Ct of the equivalent capacitance values of the first switching transistor Q1 to the fourth switching transistor Q4, and is related to the sum Cw of the equivalent capacitance values of the first capacitor C1 and the third capacitor C3. Selecting the first capacitor C1 or the third capacitor C3 with a different capacitance value can increase the sum Cw of the equivalent capacitance values of the first capacitor C1 and the third capacitor C3, decrease the resonance frequency of the LC common-mode resonant loop, and increase the impedance of the LC common-mode resonant loop, thereby decreasing the high-frequency common-mode leakage current generated by the LC common-mode resonant loop, decreasing the THDi, the EMI, and the loss of the power conversion apparatus 500, and improving the reliability of the power conversion apparatus 500.

In an implementation, as shown in FIG. 5, in the power conversion apparatus 500, due to impact of a parasitic parameter of a circuit, drive signal inconsistency, and the like, when the power conversion apparatus 500 starts to operate, the voltage at the midpoint A of the first bridge arm and the voltage at the midpoint B of the second bridge arm may differ greatly, and stress of the switching transistor may be uneven. As a result, the switching transistor may be damaged, a loss of the switching transistor may be uneven, and efficiency may be reduced. Consequently, the power conversion apparatus 500 has low reliability and low efficiency.

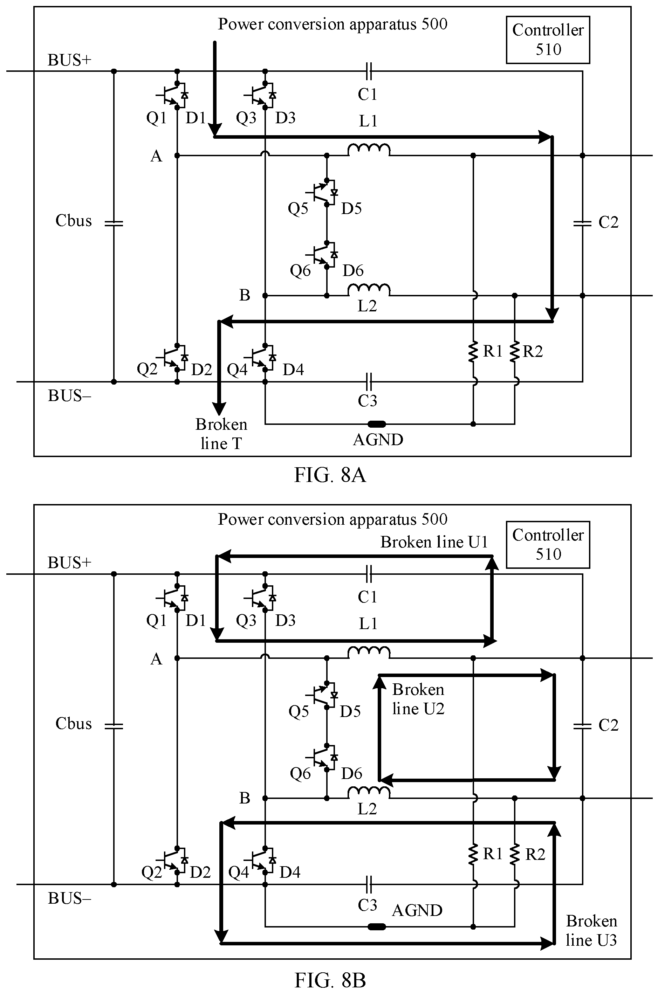

In an implementation, in the power conversion apparatus 500, to simplify hardware design and reduce costs, a reference ground and a negative direct current bus BUS- are designed to be equipotential. Specifically, FIG. 8A and FIG. 8B are schematics of a circuit topology of another power conversion apparatus 500 according to an embodiment of this application. The power conversion apparatus 500 further includes a first resistor R1 and a second resistor R2. One end of the first resistor R1 is connected to a first end of a second capacitor C2, and one end of the second resistor R2 is connected to a second end of the second capacitor C2. The other end of the first resistor R1 and the other end of the second resistor R2 are both configured to connect to the negative direct current bus BUS- and the reference ground. The reference ground may be an analog ground (analog ground, AGND).

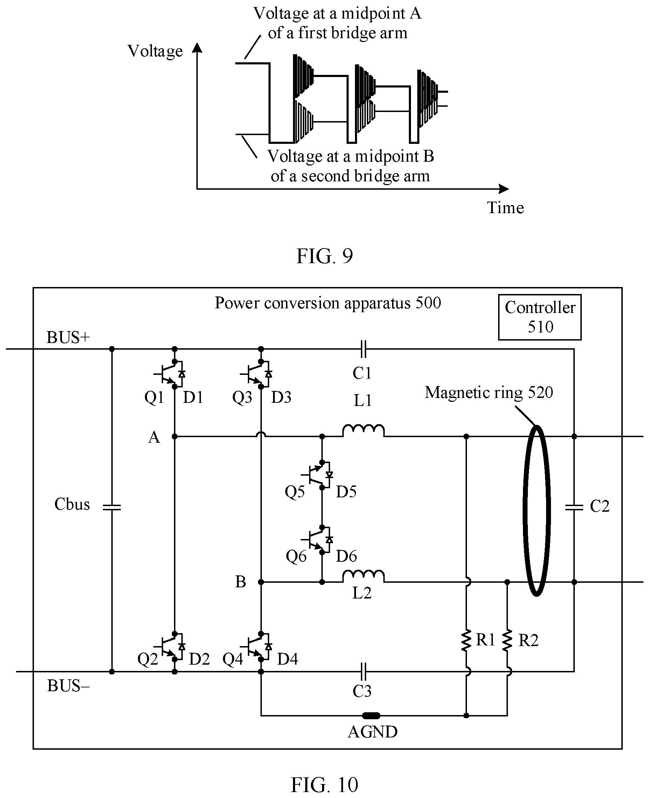

However, when the reference ground and the negative direct current bus BUS- are designed to be equipotential, before the power conversion apparatus 500 operates, a voltage at a midpoint A of a first bridge arm and a voltage at a midpoint B of a second bridge arm are both far less than half of a bus voltage. A specific voltage is related to resistance values of the first resistor R1 and the second resistor R2. The bus voltage is a voltage between a positive direct current bus BUS+ and the negative direct current bus BUS-. When the power conversion apparatus 500 starts to operate, FIG. 9 is a diagram of waveforms of a voltage at the midpoint A of the first bridge arm and a voltage at the midpoint B of the second bridge arm. It may be understood that, at a moment at which the power conversion apparatus 500 starts to operate, the voltage at the midpoint A of the first bridge arm and the voltage at the midpoint B of the second bridge arm differ greatly, and stress of the switching transistor is uneven. As a result, the switching transistor may be damaged, and a loss of the switching transistor is uneven, and efficiency is reduced. As a result, the power conversion apparatus 500 has low reliability and low efficiency.

Based on the foregoing descriptions, in an implementation, FIG. 8A and FIG. 8B are used as an example. Refer to FIG. 8A and FIG. 8B. The power conversion apparatus 500 provided in this embodiment of this application further includes a controller 510. The controller 510 is configured to: control synchronously turned-on switching transistors and a third bridge arm to be alternately turned on, to discharge the first capacitor C1 and charge a third capacitor C3, and after the synchronously turned-on switching transistors and the third bridge arm are controlled to be alternately turned on, when voltages at the two ends of the second capacitor C2 are equal (the voltage at the midpoint A of the first bridge arm is equal to the voltage at the midpoint B of the second bridge arm), and stress and losses of the switching transistors are equal during operation, control the power conversion apparatus 500 to start to operate normally, so that reliability and efficiency of the power conversion apparatus 500 can be improved. Turned-on time of the synchronously turned-on switching transistors is less than or equal to a preset time threshold, and a first switching transistor Q1 and a fourth switching transistor Q4 are the synchronously turned-on switching transistors, or a second switching transistor Q2 and a third switching transistor Q3 are the synchronously turned-on switching transistors.

For example, the first switching transistor Q1 and the fourth switching transistor Q4 are the synchronously turned-on switching transistors. Refer to FIG. 8A and FIG. 8B. In a process in which the controller 510 controls the synchronously turned-on switching transistors and the third bridge arm to be alternately turned on, to discharge the first capacitor C1 and charge the third capacitor C3, as shown in FIG. 8A, when the synchronously turned-on switching transistors are turned on, a current loop in the power conversion apparatus 500 is shown by a broken line T, and as shown in FIG. 8B, when the synchronously turned-on switching transistors are turned off, current loops in the power conversion apparatus 500 are shown by a broken line U1, a broken line U2, and a broken line U3.

In an implementation, a specific value of the preset time threshold may be determined based on stress that can be withstood by the switching transistor. A specific value of the preset time threshold is not limited in embodiments of this application.

According to the power conversion apparatus 500 provided in this embodiment of this application, at the moment at which the power conversion apparatus 500 starts to operate, the voltage at the midpoint of the first bridge arm and the voltage at the midpoint of the second bridge arm may differ greatly, and the stress of the switching transistor may be uneven. In this case, the controller 510 first controls the synchronously turned-on switching transistors and the third bridge arm to be alternately turned on, and the turned-on time of the synchronously turned-on switching transistors is less than or equal to the preset time threshold, so that damage to the switching transistor due to large stress can be avoided. In addition, when the voltages at the two ends of the second capacitor C2 are equal, the controller 510 controls the power conversion apparatus 500 to start to operate normally. The stress and the loss of the switching transistor are even when the power conversion apparatus 500 starts to operate, so that reliability and efficiency of the power conversion apparatus 500 can be improved.

In an implementation, FIG. 10 is a schematic of a circuit topology of another power conversion apparatus 500 according to an embodiment of this application. The power conversion apparatus 500 further includes a magnetic ring 520. A cable between a first inductor L1 and a first end of a second capacitor C2 passes through the magnetic ring 520, and a cable between a second inductor L2 and a second end of the second capacitor C2 also passes through the magnetic ring 520.

In an implementation, the cable between the first inductor L1 and the first end of the second capacitor C2 may be wound around the magnetic ring 520, or the cable between the second inductor L2 and the second end of the second capacitor C2 may be wound around the magnetic ring 520. A specific quantity of turns of the cable wound around the magnetic ring 520 is not limited in embodiments of this application.

In an implementation, the magnetic ring 520 is a magnetic ring 520 made of an amorphous alloy material. Because the amorphous alloy material has advantages of a high resistivity, a low magnetic hysteresis loss, and a good high-frequency characteristic, a high-frequency common-mode leakage current generated by an LC common-mode resonant loop can be further decreased.

According to the power conversion apparatus 500 provided in this embodiment of this application, disposing the magnetic ring 520 can further decrease an oscillation amplitude of a voltage at a midpoint A of a first bridge arm and an oscillation amplitude of a voltage at a midpoint B of a second bridge arm, and can further decrease the high-frequency common-mode leakage current generated by the LC common-mode resonant loop, so as to decrease THDi, EMI, and a loss of the power conversion apparatus 500, and improve the reliability of the power conversion apparatus 500.

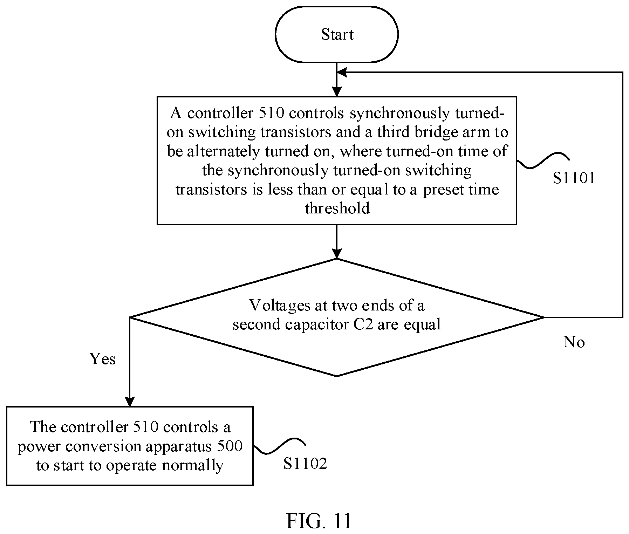

FIG. 11 is a schematic flowchart of a control method for a power conversion apparatus 500 according to an embodiment of this application. The method is applied to the power conversion apparatus 500, and the method includes Step S1101 and Step S1102.

S1101: The controller 510 controls the synchronously turned-on switching transistors and the third bridge arm to be alternately turned on, where turned-on time of the synchronously turned-on switching transistors is less than or equal to a preset time threshold. The first switching transistor Q1 and the fourth switching transistor Q4 are the synchronously turned-on switching transistors, or the second switching transistor Q2 and the third switching transistor Q3 are the synchronously turned-on switching transistors.

S1102: After the controller 510 controls the synchronously turned-on switching transistors and the third bridge arm to be alternately turned on, when voltages at the two ends of the second capacitor C2 are equal, the controller 510 controls the power conversion apparatus 500 to start to operate normally.

In an implementation, after the controller 510 controls the synchronously turned-on switching transistors and the third bridge arm to be alternately turned on, when the voltages at the two ends of the second capacitor C2 are not equal, the controller 510 may continue to control the synchronously turned-on switching transistors and the third bridge arm to be alternately turned on.

According to the control method for the power conversion apparatus 500 provided in this embodiment of this application, at a moment at which the power conversion apparatus 500 starts to operate, a voltage at the midpoint of the first bridge arm and a voltage at the midpoint of the second bridge arm may differ greatly, and stress of the switching transistor may be uneven. In this case, the controller 510 first controls the synchronously turned-on switching transistors and the third bridge arm to be alternately turned on, and the turned-on time of the synchronously turned-on switching transistors is less than or equal to the preset time threshold, so that damage to the switching transistor due to large stress can be avoided. In addition, when the voltages at the two ends of the second capacitor C2 are equal, the controller 510 controls the power conversion apparatus 500 to start to operate normally. The stress and a loss of the switching transistor are even when the power conversion apparatus 500 starts to operate, so that reliability and efficiency of the power conversion apparatus 500 can be improved.

In view of this, as shown in FIG. 1, an embodiment of this application further provides a photovoltaic energy storage system 100. The photovoltaic energy storage system 100 includes a photovoltaic inverter 110 and a first energy storage battery 120. A first direct current port of the photovoltaic inverter 110 is configured to connect to a photovoltaic array 200. A second direct current port of the photovoltaic inverter 110 is connected to an electrode of the first energy storage battery 120. An alternating current port of the photovoltaic inverter 110 is configured to connect to a power grid or a load 300. A circuit topology of the photovoltaic inverter 110 is the circuit topology of the power conversion apparatus 500 shown in any one of FIG. 5, FIG. 8A and FIG. 8B, or FIG. 10.

In an implementation, as shown in FIG. 1, the photovoltaic energy storage system 100 may further include a second energy storage battery 130 and a power conversion system 140. An electrode of the second energy storage battery 130 is connected to a direct current port of the power conversion system 140. An alternating current port of the power conversion system 140 is connected to the alternating current port of the photovoltaic inverter 110. A circuit topology of the power conversion system 140 is the circuit topology of the power conversion apparatus 500 shown in any one of FIG. 5, FIG. 8A and FIG. 8B, or FIG. 10.

The foregoing detailed descriptions of the power conversion apparatus 500 and the beneficial effect analysis may be correspondingly introduced to the control method for the power conversion apparatus and the photovoltaic energy storage system 100 shown in FIG. 1. Details are not described herein again in embodiments of this application.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A power conversion apparatus, wherein the power conversion apparatus is configured to convert a direct current output by a photovoltaic array or an energy storage battery into an alternating current, and the power conversion apparatus comprises a first inductor, a second inductor, a positive direct current bus, a negative direct current bus, a bus capacitor connected between the positive direct current bus and the negative direct current bus, a first bridge arm, a second bridge arm, a capacitor branch, and a third bridge arm connected between a midpoint of the first bridge arm and a midpoint of the second bridge arm;
the first bridge arm comprises a first switching transistor and a second switching transistor that are connected in series, the second bridge arm comprises a third switching transistor and a fourth switching transistor that are connected in series, the third bridge arm comprises a fifth switching transistor and a sixth switching transistor, and a drain or a collector of the fifth switching transistor is connected to a drain or a collector of the sixth switching transistor, or a source or an emitter of the fifth switching transistor is connected to a source or an emitter of the sixth switching transistor; and
the capacitor branch comprises a first capacitor, a second capacitor, and a third capacitor that are connected in series, the first inductor is connected between a first end of the third bridge arm and a first end of the second capacitor, the second inductor is connected between a second end of the third bridge arm and a second end of the second capacitor, the first capacitor is connected between the positive direct current bus and the first end of the second capacitor, the third capacitor is connected between the second end of the second capacitor and the negative direct current bus, and the two ends of the second capacitor are configured to connect to a power grid or a load.

2. The power conversion apparatus according to claim 1, wherein the power conversion apparatus further comprises a first resistor and a second resistor, one end of the first resistor is connected to the first end of the second capacitor, one end of the second resistor is connected to the second end of the second capacitor, and the other end of the first resistor and the other end of the second resistor are both configured to connect to the negative direct current bus and a reference ground.

3. The power conversion apparatus according to claim 1 or 2, wherein the power conversion apparatus further comprises a controller; and
the controller is configured to: control synchronously turned-on switching transistors and the third bridge arm to be alternately turned on, and after the synchronously turned-on switching transistors and the third bridge arm are alternately turned on, when voltages at the two ends of the second capacitor are equal, control the power conversion apparatus to start to operate normally, wherein turned-on time of the synchronously turned-on switching transistors is less than or equal to a preset time threshold, and the first switching transistor and the fourth switching transistor are the synchronously turned-on switching transistors, or the second switching transistor and the third switching transistor are the synchronously turned-on switching transistors.

4. The power conversion apparatus according to any one of claims 1 to 3, wherein
a first capacitance value sum is greater than or equal to N times a second capacitance value sum, wherein the first capacitance value sum is a sum of equivalent capacitance values of the first capacitor and the third capacitor, the second capacitance value sum is a sum of equivalent capacitance values of the first switching transistor, the second switching transistor, the third switching transistor, and the fourth switching transistor, and N is greater than 1.

5. The power conversion apparatus according to claim 4, wherein N is equal to 10 or 20.

6. The power conversion apparatus according to any one of claims 1 to 5, wherein the power conversion apparatus further comprises a magnetic ring, a cable between the first inductor and the first end of the second capacitor passes through the magnetic ring, and a cable between the second inductor and the second end of the second capacitor also passes through the magnetic ring.

7. The power conversion apparatus according to claim 6, wherein the magnetic ring is a magnetic ring made of an amorphous alloy material.

8. A control method for a power conversion apparatus, applied to the power conversion apparatus, wherein the method comprises:
controlling synchronously turned-on switching transistors and a third bridge arm to be alternately turned on, and after the synchronously turned-on switching transistors and the third bridge arm are alternately turned on, when voltages at two ends of a second capacitor are equal, controlling the power conversion apparatus to start to operate normally, wherein turned-on time of the synchronously turned-on switching transistors is less than or equal to a preset time threshold, and a first switching transistor and a fourth switching transistor are the synchronously turned-on switching transistors, or a second switching transistor and a third switching transistor are the synchronously turned-on switching transistors, wherein
the power conversion apparatus is configured to convert a direct current output by a photovoltaic array or an energy storage battery into an alternating current, and the power conversion apparatus comprises a first inductor, a second inductor, a positive direct current bus, a negative direct current bus, a bus capacitor connected between the positive direct current bus and the negative direct current bus, a first bridge arm, a second bridge arm, a capacitor branch, and the third bridge arm connected between a midpoint of the first bridge arm and a midpoint of the second bridge arm;
the first bridge arm comprises the first switching transistor and the second switching transistor that are connected in series, the second bridge arm comprises the third switching transistor and the fourth switching transistor that are connected in series, the third bridge arm comprises a fifth switching transistor and a sixth switching transistor, and a drain or a collector of the fifth switching transistor is connected to a drain or a collector of the sixth switching transistor, or a source or an emitter of the fifth switching transistor is connected to a source or an emitter of the sixth switching transistor; and
the capacitor branch comprises a first capacitor, the second capacitor, and a third capacitor that are connected in series, the first inductor is connected between a first end of the third bridge arm and a first end of the second capacitor, the second inductor is connected between a second end of the third bridge arm and a second end of the second capacitor, the first capacitor is connected between the positive direct current bus and the first end of the second capacitor, the third capacitor is connected between the second end of the second capacitor and the negative direct current bus, and the two ends of the second capacitor are configured to connect to a power grid or a load.

9. The method according to claim 8, wherein the power conversion apparatus further comprises a first resistor and a second resistor, one end of the first resistor is connected to the first end of the second capacitor, one end of the second resistor is connected to the second end of the second capacitor, and the other end of the first resistor and the other end of the second resistor are both configured to connect to the negative direct current bus and a reference ground.

10. The method according to claim 8 or 9, wherein
a first capacitance value sum is greater than or equal to N times a second capacitance value sum, wherein the first capacitance value sum is a sum of equivalent capacitance values of the first capacitor and the third capacitor, the second capacitance value sum is a sum of equivalent capacitance values of the first switching transistor, the second switching transistor, the third switching transistor, and the fourth switching transistor, and N is greater than 1.

11. The method according to claim 10, wherein N is equal to 10 or 20.

12. A photovoltaic energy storage system, wherein the photovoltaic energy storage system comprises a power conversion apparatus and an energy storage battery, a positive electrode of the energy storage battery is connected to a positive direct current bus, a negative electrode of the energy storage battery is connected to a negative direct current bus, the power conversion apparatus is configured to convert a direct current output by a photovoltaic array or an energy storage battery into an alternating current, and the power conversion apparatus comprises a first inductor, a second inductor, the positive direct current bus, the negative direct current bus, a bus capacitor connected between the positive direct current bus and the negative direct current bus, a first bridge arm, a second bridge arm, a capacitor branch, and a third bridge arm connected between a midpoint of the first bridge arm and a midpoint of the second bridge arm;
the first bridge arm comprises a first switching transistor and a second switching transistor that are connected in series, the second bridge arm comprises a third switching transistor and a fourth switching transistor that are connected in series, the third bridge arm comprises a fifth switching transistor and a sixth switching transistor, and a drain or a collector of the fifth switching transistor is connected to a drain or a collector of the sixth switching transistor, or a source or an emitter of the fifth switching transistor is connected to a source or an emitter of the sixth switching transistor; and
the capacitor branch comprises a first capacitor, a second capacitor, and a third capacitor that are connected in series, the first inductor is connected between a first end of the third bridge arm and a first end of the second capacitor, the second inductor is connected between a second end of the third bridge arm and a second end of the second capacitor, the first capacitor is connected between the positive direct current bus and the first end of the second capacitor, the third capacitor is connected between the second end of the second capacitor and the negative direct current bus, and the two ends of the second capacitor are configured to connect to a power grid or a load.

13. The system according to claim 12, wherein the power conversion apparatus further comprises a first resistor and a second resistor, one end of the first resistor is connected to the first end of the second capacitor, one end of the second resistor is connected to the second end of the second capacitor, and the other end of the first resistor and the other end of the second resistor are both configured to connect to the negative direct current bus and a reference ground.

14. The system according to claim 12 or 13, wherein the power conversion apparatus further comprises a controller; and
the controller is configured to: control synchronously turned-on switching transistors and the third bridge arm to be alternately turned on, and after the synchronously turned-on switching transistors and the third bridge arm are alternately turned on, when voltages at the two ends of the second capacitor are equal, control the power conversion apparatus to start to operate normally, wherein turned-on time of the synchronously turned-on switching transistors is less than or equal to a preset time threshold, and the first switching transistor and the fourth switching transistor are the synchronously turned-on switching transistors, or the second switching transistor and the third switching transistor are the synchronously turned-on switching transistors.

15. The system according to any one of claims 12 to 14, wherein
a first capacitance value sum is greater than or equal to N times a second capacitance value sum, wherein the first capacitance value sum is a sum of equivalent capacitance values of the first capacitor and the third capacitor, the second capacitance value sum is a sum of equivalent capacitance values of the first switching transistor, the second switching transistor, the third switching transistor, and the fourth switching transistor, and N is greater than 1, or N is equal to 10 or 20.
